# EUROPÄISCHE PATENTSCHRIFT

(11) **EP 1 191 230 B1**
(45) Veröffentlichungstag und Bekanntmachung des Hinweises auf die Patenterteilung: **20.08.2003**
(21) Anmeldenummer: 01810824.1
(22) Anmeldetag: 23.08.2001
(51) Int. Cl.: F04D 29/04

(54) **Kupplungsvorrichtung**
Coupling device
Dispositif d'accouplement

(30) Priorität: 22.09.2000 EP 00810875
(43) Veröffentlichungstag der Anmeldung: 27.03.2002
(73) Patentinhaber: MAN Turbomaschinen AG, 46145 Oberhausen (DE)
(72) Erfinder: Fisch, Klemens, 8953 Dietikon (CH); Hof, Adrian, 4600 Olten (CH); Suter, Roger, 8001 Zürich (CH)
(74) Vertreter: Radünz, Ingo, Dipl.-Ing.

(56) Entgegenhaltungen:
- EP-A- 0 008 616
- DE-A- 2 658 687
- US-A- 3 698 775
- US-A- 4 767 378

## Beschreibung

Die Erfindung betrifft eine Kupplungsvorrichtung gemäss dem Oberbegriff von Anspruch 1.

Aus der Druckschrift DE 26 58 687 A1 ist eine Lagervorrichtung für einen Turboverdichter bekannt. Diese Lagervorrichtung ist insbesondere für sehr lang ausgestaltete Turbomaschinen mit einer Mehrzahl nebeneinander auf einer gemeinsamen Welle angeordneter Verdichterräder geeignet. Die Läuferwelle dieser bekannten Lagervorrichtung ist mittels elektromagnetischer Radiallager sowie eines elektromagnetischen Axiallagers vollständig elektromagnetisch gelagert. Nachteilig an dieser bekannten Lagervorrichtung ist die Tatsache, dass das Axiallager eine geringe Tragkraft aufweist. Insbesondere wenn mehrere Verdichterräder auf der Läuferwelle angeordnet sind können in axialer Richtung relativ grosse Kraftvariationen auftreten, wodurch die bekannte Lagervorrichtung überlastet oder beschädigt werden könnte. Weiter ist an der bekannten Lagervorrichtung die Tatsache nachteilig, dass sich das Axiallager ungünstig auf das rotordynamische Verhalten der Welle auswirken kann.

Es ist Aufgabe der vorliegenden Erfindung eine Vorrichtung für einen Turboverdichter zu schaffen, welche einen vorteilhafteren Betrieb ermöglicht.

Diese Aufgabe wird gelöst mit einer Kupplungsvorrichtung aufweisend die Merkmale von Anspruch 1. Die Unteransprüche 2 bis 7 betreffen weitere, vorteilhaft ausgestaltete Kupplungsvorrichtungen. Die Aufgabe wird weiter gelöst mit einem Turboverdichter aufweisend die Merkmale von Anspruch 8.

Die Aufgabe wird insbesondere gelöst mit einer Kupplungsvorrichtung zum Verbinden zweier rotierbarer Wellen eines Turboverdichters, umfassend ein erstes und ein zweites Kupplungsteil, welche zum festen Verbinden mit je einem Endabschnitt der Wellen ausgestaltet sind, sowie umfassend ein scheibenförmig ausgestaltetes drittes Kupplungsteil, welches zwischen dem ersten und zweiten Kupplungsteil anzuordnen ist, wobei das erste, zweite und dritte Kupplungsteil fest miteinander verbindbar sind, und wobei das dritte Kupplungsteil einen in radialer Richtung über das erste oder zweite Kupplungsteil vorstehenden Abschnitt aufweist, welcher als Lagerscheibe eines Axiallagers ausgestaltet ist.

Die erfindungsgemässe Kupplungsvorrichtung weist den weiteren Vorteil auf, dass die Lagerscheibe radial relativ gross ausgestaltbar ist, um mit dem elektromagnetischen Axiallager eine grosse Kraft in axialer Richtung zu bewirken. Bedingt durch die hohe Drehzahl eines Turbokompressors treten an einer schweren Lagerscheibe bzw. an einer Lagerscheibe mit relativ grossem Durchmesser hohe Radialkräfte beziehungsweise grosse Fliehkraftspannungen auf. Die erfindungsgemässe Kupplungsvorrichtung ermöglicht die Lagerscheibe derart auszugestalten, dass sie für hohe Drehzahlen, beispielsweise für eine Umfangsgeschwindigkeit von 400 m/s, geeignet ist. In einer bevorzugten Ausführungsform ist die Lagerscheibe als eine durchgehende Lagerscheibe, ohne eine Bohrung in deren Zentrum, ausgestaltet. Zudem ist die Lagerscheibe bevorzugt geschmiedet. Eine derart ausgestaltete Lagerscheibe weist die erforderlichen Materialeigenschaften auf, um auch bei hohen Drehzahlen sicher betrieben zu werden. In einer weiteren, vorteilhaften Ausgestaltung ist die Lagerscheibe gegen aussen dünner werdend ausgestaltet, um deren Masse zu reduzieren, und dadurch eine spannungsmässig optimierte Bauform zu erreichen.

Die Welle eines Turboverdichters weist insbesondere im Bereich der ersten, zweiten, dritten oder vierten kritischen Resonanzfrequenz grosse radiale Auslenkungen auf, wobei die Welle in deren Verlaufsrichtung Schwingungsbäuche und Schwingungsknoten ausbildet. Ein Vorteil der erfindungsgemässen Kupplungsvorrichtung ist die Tatsache, dass durch die Verkürzung der Baulänge, welche sich aus der Integration der Axiallagerscheibe in die Kupplung ergibt, eine bessere Beeinflussbarkeit der Rotordynamik erzielbar ist.

Die Erfindung wird im weiteren an Hand mehrerer Ausführungsbeispiele beschrieben, wobei dieselben Bezugszeichen dieselben Gegenstände betreffen. Es zeigen:
- Fig. 1: ein Längsschnitt eines Turboverdichters mit einem Elektromotor, einem Radialturboverdichter sowie einer Kupplungsvorrichtung;
- Fig. 2: ein Längsschnitt durch eine Kupplungsvorrichtung;
- Fig. 3: ein Längsschnitt durch eine weitere Kupplungsvorrichtung;
- Fig. 4: ein Längsschnitt durch die Lagerscheibe eines Axiallagers;
- Fig. 5: ein Ausschnitt einen Seitenansicht der Lagerscheibe gemäss Fig. 4.

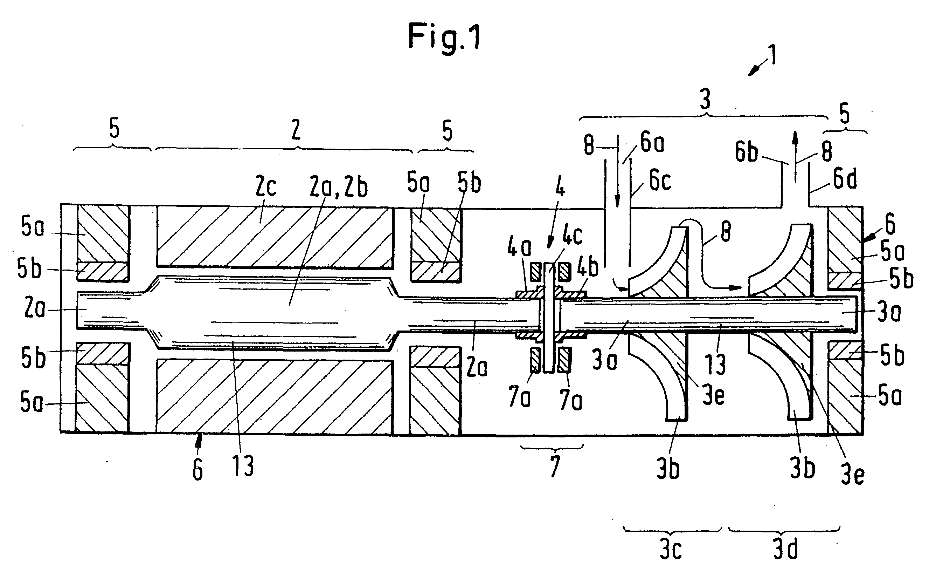

Fig. 1 zeigt schematisch einen Turboverdichter 1, welcher einen Radialturboverdichter 3 mit einer Welle 3a sowie einen antreibenden Elektromotor 2 mit einer Welle 2a umfasst. Die beiden Wellen 2a, 3a sind über eine Kupplung 4 umfassend drei Kupplungsteile 4a,4b,4c miteinander verbunden, sodass der Elektromotor 2 über die Welle 2a und die Kupplung 4 die Welle 3a des Radialturboverdichters 3 antreibt. Die beiden Wellen 2a, 3a sind durch drei elektromagnetische Radiallager 5 gelagert. Die Kupplung 4 umfasst ein erstes Kupplungsteil 4a, ein zweites Kupplungsteil 4b sowie ein dazwischen angeordnetes drittes Kupplungsteil 4c, welches zugleich die Lagerscheibe des Axiallagers 7 bildet, weshalb unmittelbar neben dem Kupplungsteil 4c Elektromagnete 7c umfassend elektromagnetische Spulen 7a angeordnet sind, um derart ein elektromagnetisches Axiallager 7 auszubilden.

Der in Figur 1 dargestellte Turboverdichter 1 umfasst ein hermetisch abgedichtetes Druckgehäuse 6 innerhalb welchem der Elektromotor 2 und der Radialturboverdichter 3 angeordnet sind. Eine das Druckgehäuse 6 durchdringende Zuleitung 6c und Ableitung 6d verbinden den Radialturboverdichter 3 fluidleitend mit einer ausserhalb des Druckgehäuses 6 angeordneten Vorrichtung beziehungsweise mit einem ausserhalb des Druckgehäuses ablaufenden Verfahrensprozess. Der Elektromotor 2 umfasst den Rotor 2b sowie den Stator 2c, wobei der Rotor 2b Teil der Motorwelle 2a bildet. Die Motorwelle 2a ist beidseitig im elektromagnetischen Radiallager 5, umfassend je eine Abstützvorrichtung 5a sowie eine elektromagnetische Spule 5b, in radialer Richtung gelagert. Die Motorwelle 2a ist an deren einem Endabschnitt über eine Kupplung 4 mit dem Endabschnitt des Läufer 3a des Radialturboverdichters 3 verbunden. An der Verbindungsstelle zwischen Motorwelle 2a und Kompressorwelle 3a ist nebst der Kupplung 4 zudem das elektromagnetische Axiallager 7 angeordnet. Die Motorwelle 2a sowie der Läufer 3a bilden eine gemeinsame Welle. In Verlaufsrichtung des Läufers 3a sind zwei Verdichterräder 3b angeordnet, welche eine erste Verdichtungsstufe 3c sowie eine zweite Verdichtungsstufe 3d ausbilden. Nicht dargestellt sind die Leitschaufeln beziehungsweise der Diffusor des Radialturboverdichters 3. Der Hauptmassenstrom 8 des zu komprimierenden Fluides, vorzugsweise in Form eines Gases, tritt über die Eintrittsöffnung 6a und die Zuleitung 6c in die erste Verdichtungsstufe 3c ein und wird nachfolgend zur zweiten Verdichtungsstufe 3d und nachfolgend über die Ableitung 6d zur Austrittsöffnung 6b geleitet.

Der Turboverdichter 1 könnte natürlich eine Mehrzahl von in Verlaufsrichtung des Läufers 3a beabstandet angeordneten Verdichterräder 3b aufweisen, so beispielsweise auch gesamthaft drei, vier, fünf, sechs, sieben, acht, neun oder zehn Verdichterräder 3b. Der zu erzielende Kompressionsdruck ist nach oben weitgehend offen, wobei durch eine entsprechende Anzahl in Serie geschalteter Verdichterräder 3b beispielsweise ein Kompressionsdruck von 600 Bar erreichbar ist. Der Turboverdichter 1 könnte auch einen oder mehrere weitere Radialturboverdichter 3 und/oder Elektromotoren 2 umfassen, welche in Verlaufsrichtung des Läufers 3a;2a angeordnet sind, wobei alle Läufer 3a;2a eine gemeinsame Welle ausbilden. Diese gemeinsame Welle könnte durch Radiallager, insbesondere magnetische Radiallager 5 gelagert sein, wobei zwischen je einem Radialturboverdichter 3 vorzugsweise ein einziges Radiallager 5 angeordnet ist. Vorzugsweise sind alle Radialturboverdichter 3 gemeinsam mit dem Elektromotor 2 oder den Elektromotoren 2 in einem gemeinsamen, einzigen Druckgehäuse 6 angeordnet.

Die elektromagnetischen Radiallager 5 sowie die den Radiallagern 5 zugeordneten Abschnitte der Wellen 2a und 3a weisen weitere, für einen Fachmann selbstverständliche und daher nicht dargestellte Komponenten auf, um ein elektromagnetisches Radiallager 5 auszubilden, wie elektrische Spulen, ferromagnetische Teile usw. Dasselbe gilt für den Elektromotor 2, welcher ebenfalls nur schematisch dargestellt ist.

Während dem Betrieb des in Figur 1 dargestellten Turboverdichters 1 können an der gemeinsamen Welle 2a,3a relativ hohe axiale Kräfte auftreten. Die erfindungsgemässe Kupplungsvorrichtung 4 ermöglicht ein elektromagnetisches Axiallager 7 mit einer relativ grossen Lagerscheibe 4c auszubilden, was hohe axiale Lagerkräfte zu erzeugen erlaubt.

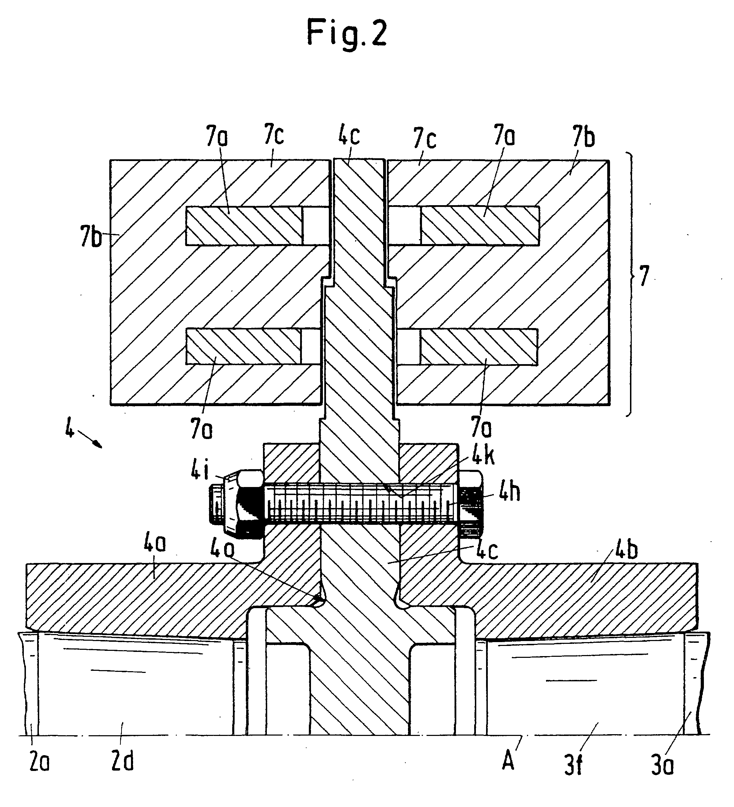

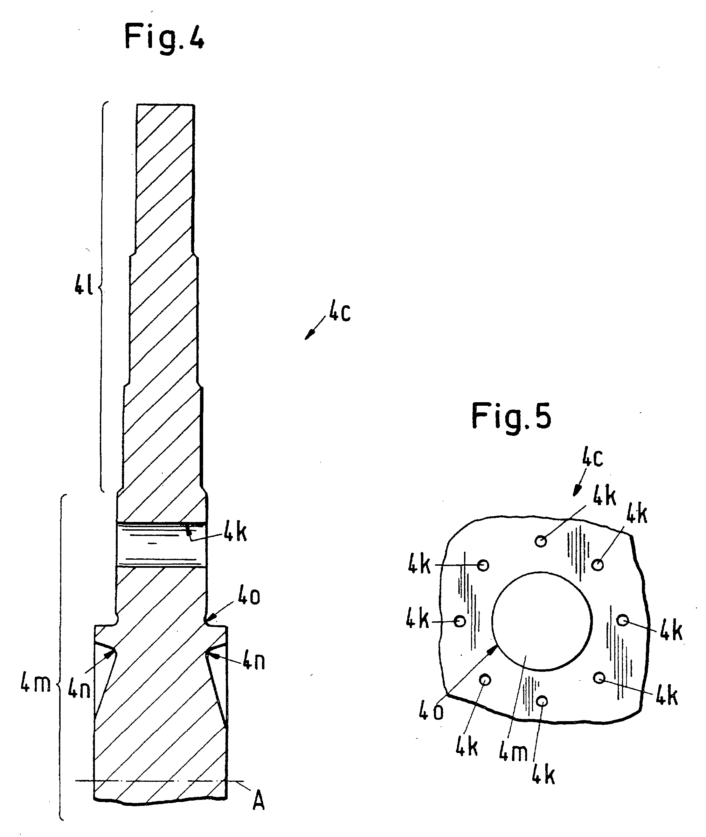

Der in Fig. 2 dargestellte Längsschnitt durch die Kupplungsvorrichtung 4 zeigt die Motorwelle 2a mit konisch verlaufendem Endabschnitt 2d sowie die Welle 3a des Radialturboverdichters 3 mit konisch verlaufendem Endabschnitt 3f, welche mit der Kupplungsvorrichtung 4 verdrehfest miteinander verbunden sind.Das erste Kupplungsteil 4a ist auf den Endabschnitt 2d der Motorwelle 2a aufgeschrumpft und derart fest mit dieser verbunden. Das zweite Kupplungsteil 4b ist auf den Endabschnitt 3f der Welle 3a aufgeschrumpft und derart fest mit dieser verbunden. Zwischen dem ersten und zweiten Kupplungsteil 4a,4b ist das als Vollscheibe ausgebildete dritte Kupplungsteil 4c eingespannt. Das Kupplungsteil 4c weist, wie aus der Seitenansicht gemäss Fig. 5 ersichtlich, eine Mehrzahl in Umfangsrichtung beabstandet angeordneter Bohrungen 4k aufweist, und das erste und zweite Kupplungsteil 4a, 4b weist entsprechend angepasst angeordnete Bohrungen auf, sodass, wie in Fig. 2 dargestellt, die drei Kupplungsteile 4a,4b,4c durch jeweils eine gemeinsame Schraube 4h mit Mutter 4i zusammengehalten sind. In Umfangsrichtung der Kupplungsvorrichtung 4 sind vorzugsweise 6, 8 oder 12 derartige Schrauben 4h mit Mutter 4i regelmässig beabstandet angeordnet, um die drei Kupplungsteile 4a, 4b, 4c zusammenzuhalten und das erforderliche Drehmoment zu übertragen. Das dritte Kupplungsteil 4c bildet zugleich die Lagerscheibe des Axiallagers 7. Entlang des in radialer Richtung über das erste oder zweite Kupplungsteil 4a,4b vorstehenden Abschnitts 41 der Lagerscheibe 4c sind beidseits Elektromagnete 7c umfassend ein geblechtes Weicheisen 7b sowie elektromagnetische Spulen 7a angeordnet, um eine in axialer Richtung A wirkende Kraft auf die Lagerscheibe 4c zu bewirken.

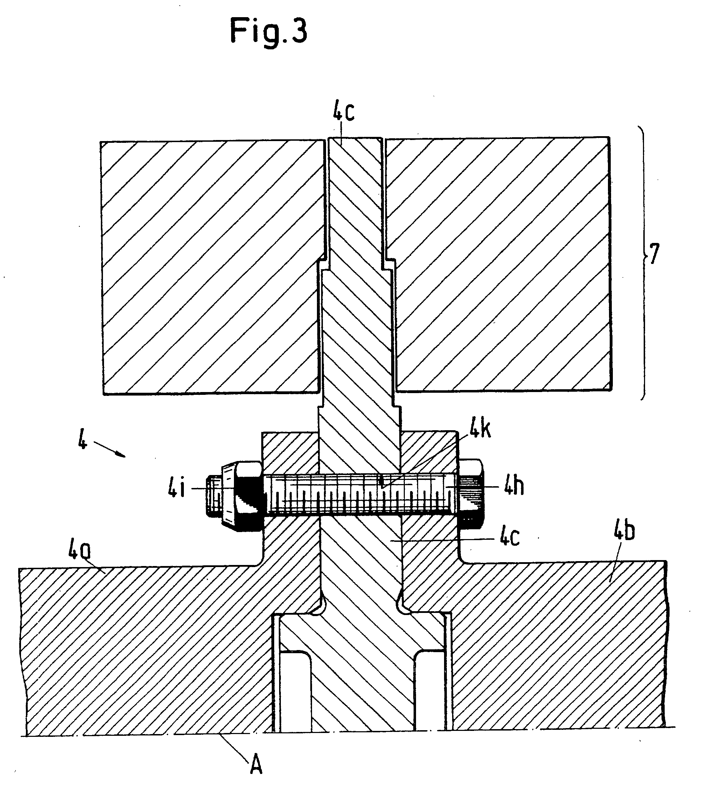

Fig. 3 zeigt in einem Längsschnitt ein weiteres Ausführungsbeispiel einer Kupplungsvorrichtung 4, wobei die Enden der Motorwelle 2a sowie der Welle 3a als Kupplungsflansche 4a, 4b ausgebildet sind, welche zusammen mit der dritten Kupplungsteil 4c mittels Schrauben 4h, 4i verdrehfest miteinander verbunden sind. Die Details des Axiallagers 7, wie Elektromagnete 7c und Spulen 7a sind nicht dargestellt, können jedoch wie in Fig. 2 dargestellt ausgeführt sein.

Fig. 4 zeigt in einem Längsschnitt ein weiteres Ausführungsbeispiel eines dritten Kupplungsteils 4c beziehungsweise einer Lagerscheibe 4c. Die Lagerscheibe 4c umfasst ein inneres Scheibenteil 4m, welches zwischen das erstes und zweite Kupplungsteil 4a,4b eingespannt wird, sowie ein äusseres Scheibenteil 4l, entlang welchem die Elektromagnete 7c angeordnet werden. Radial zur axialen Richtung A ist das äussere Scheibenteil 4l gegen aussen dünner werdend ausgestaltet, um dadurch Masse zu sparen. Am inneren Scheibenteil 4m ist eine in Umfangsrichtung verlaufende Ausrundung 4o angeordnet, welche, wie aus Fig. 2 ersichtlich, ein zentrieren des ersten und zweiten Kupplungsteils 4a,4b bezüglich dem dritten Kupplungsteil 4c erlaubt. Die Ausrundung 4o weist zudem eine Ausrundung auf, um Kerbspannungen zu vermeiden. Aus demselben Grund ist im inneren Scheibenteil 4m eine sich in Umfangsrichtung erstreckende Ausnehmung 4n angeordnet.

Das dritte Kupplungsteil 4c wird nicht mit einem spanenden Verfahren sondern durch einen Umformprozessung, vorzugsweise durch Schmieden hergestellt. Unter dem Begriff Umformprozess wird ein Formen durch Kraftanwendung und ohne Span abtragende Bearbeitung verstanden. Nach dem Umformprozess kann die Oberfläche des Werkstücks noch bearbeitet werden, beispielsweise durch Schleifen oder Drehen. Das dritte Kupplungsteil 4c könnte auch eine in deren Drehzentrum angeordnete Durchbrechung oder Bohrung aufweisen. So könnte das in Fig. 4 dargestellte Kupplungsteil 4c eine Durchbrechung aufweisen, welche sich ausgehend von der mit 4n dargestellten Stelle bis zum Drehzentrum A erstreckt. Um den hohen Fliehkräften stand zu halten ist das dritte Kupplungsteil 4c jedoch vorzugsweise, wie in Fig. 4 dargestellt, als durchgehende Lagerscheibe ausgestaltet. Zudem wird vorzugsweise darauf geachtet, dass das dritte Kupplungsteil 4c im Drehzentrum A keine Bohrung aufweist, und dass an der Peripherie nur wenige Bohrungen und zudem vorzugsweise mit möglichst kleinen Bohrungsquerschnitten angeordnet sind, um die Spannungsfestigkeit des dritten Kupplungsteils 4c nicht oder nur geringfügig zu reduzieren.

Der maximale Durchmesser des Kupplungsteils 4c beziehungsweise der Lagerscheibe wird durch die maximal mögliche Umfangsgeschwindigkeit bestimmt. Die Lagerscheibe 4c kann beispielsweise einen maximalen Durchmesser von 50 cm aufweisen.

Die erfindungsgemässe Kupplung 4 hat zwei Funktionen, nämlich die Kupplung und die axiale Lagerung der beiden Wellen 2a,3a. Weil die erfindungsgemässe Kupplung 4 beide Funktionen ausübt weist die gesamte Welle, umfassend die Wellen 2a, 3a und die Kupplung 4 eine kurze Baulänge auf. Durch diese kurze Baulänge wird ein vorteilhaftes Schwingungsverhalten der gesamten Welle erzielt. Die kurze Baulänge weist zudem den Vorteil auf, dass die Länge der gesamten Welle verlängert werden kann, falls dies beispielsweise aus schwingungstechnischen Gründen vorteilhaft ist.

## Patentansprüche

1. Kupplungsvorrichtung (4) zum Verbinden zweier rotierbarer Wellen (2a,3a) eines Turboverdichters (1), umfassend ein erstes und ein zweites Kupplungsteil (4a,4b), welche Teil der Welle (2a,3a) bilden oder zum festen Verbinden mit je einem Endabschnitt der Wellen (2a,3a) ausgestaltet sind, sowie umfassend ein scheibenförmig ausgestaltetes drittes Kupplungsteil (4c), welches zwischen dem ersten und zweiten Kupplungsteil (4a,4b) anzuordnen ist, wobei das erste, zweite und dritte Kupplungsteil (4a,4b,4c) fest miteinander verbindbar sind, und wobei das dritte Kupplungsteil (4c) einen in radialer Richtung über das erste oder zweite Kupplungsteil (4a,4b) vorstehenden Abschnitt (4l) aufweist, welcher als Lagerscheibe eines Axiallagers (7) ausgestaltet ist.

2. Kupplungsvorrichtung (4) nach Anspruch 1, **dadurch gekennzeichnet, dass** zumindest der vorstehende Abschnitt (4l) des dritten Kupplungsteils (4c) durch einen Umformprozess, insbesondere Schmieden hergestellt ist.

3. Kupplungsvorrichtung (4) nach einem der vorhergehenden Ansprüche, **dadurch gekennzeichnet, dass** das dritte Kupplungsteil (4c) als Scheibe, ohne eine Bohrung in deren Zentrum, ausgestaltet ist.

4. Kupplungsvorrichtung (4) nach einem der vorhergehenden Ansprüche, **dadurch gekennzeichnet, dass** das dritte Kupplungsteil (4c) eine Mehrzahl exzentrisch angeordneter Bohrungen (4k) aufweist, welche insbesondere auf einer bezüglich dem dritten Kupplungsteil (4c) konzentrisch verlaufenden Kreislinie angeordnet sind.

5. Kupplungsvorrichtung (4) nach einem der vorhergehenden Ansprüche, **dadurch gekennzeichnet, dass** die Dicke des dritten Kupplungsteils (4c) radial gegen aussen abnimmt.

6. Kupplungsvorrichtung (4) nach einem der vorhergehenden Ansprüche, **dadurch gekennzeichnet, dass** das dritte Kupplungsteil (4c) zumindest eine in Umfangsrichtung verlaufende, kreisförmige Ausrundung (4o) aufweist, welche bezüglich dem dritten Kupplungsteil (4c) konzentrisch angeordnet ist.

7. Kupplungsvorrichtung (4) nach einem der vorhergehenden Ansprüche umfassend einen Elektromagnet (7c), welcher neben dem dritten Kupplungsteil (4c) angeordnet ist.

8. Turboverdichter umfassend eine Kupplungsvorrichtung (4) nach einem der vorhergehenden Ansprüche.

## Claims

1. Coupling device (4) for connecting two rotatable shafts (2a, 3a) of a turbocompressor (1), comprising a first and a second coupling part (4a, 4b), which form part of the shaft (2a, 3a) or are designed for fixed connection each with a respective end portion of the shafts (2a, 3a), as well as comprising a third coupling part (4c) which is formed to be disc-shaped and which is to be arranged between the first and the second coupling part (4a, 4b), wherein the first, second and third coupling parts (4a, 4b, 4c) are fixedly connected together and wherein the third coupling part (4c) has a portion (4l) which projects in radial direction beyond the first or second coupling part (4a, 4b) and which is formed as a bearing disc of an axial bearing (7).

2. Coupling device (4) according to claim 1, **characterised in that** at least the projecting portion (4l) of the third coupling part (4c) is formed by a shaping process, particularly forging.

3. Coupling device (4) according to one of the preceding claims, **characterised in that** the third coupling part (4c) is formed as a disc without a bore in the centre thereof.

4. Coupling device (4) according to one of the preceding claims, **characterised in that** the third coupling part (4c) has a plurality of eccentrically arranged bores (4k) which are arranged, in particular, on a circular line extend concentrically with respect to the third coupling part (4c).

5. Coupling device (4) according to one of the preceding claims, **characterised in that** the thickness of the third coupling part (4c) decreases radially outwardly.

6. Coupling device (4) according to one of the preceding claims, **characterised in that** the third coupling part (4c) has at least one circular radiusing (4o) which extends in circumferential direction and which is concentrically arranged with respect to the third coupling part (4c).

7. Coupling device (4) according to one of the preceding claims, comprising an electromagnet (7c) which is arranged adjacent to the third coupling part (4c).

8. Turbocompressor comprising a coupling device (4) according to one of the preceding claims.

## Revendications

1. Dispositif d'accouplement (4) pour relier deux arbres rotatifs (2a, 3a) d'un turbocompresseur (1), comprenant une première et une deuxième pièce d'accouplement (4a, 4b), qui constituent des parties de l'arbre (2a, 3a) ou sont réalisées pour être assemblées fermement avec chacune une section d'extrémité des arbres (2a, 3a), ainsi que comprenant une troisième pièce d'accouplement (4c) réalisée en forme de disque, laquelle doit être montée entre la première et la deuxième pièce d'accouplement (4a, 4b), la première, la deuxième et la troisièmes pièce d'accouplement (4a, 4b, 4c) pouvant être assemblées fermement ensemble, et la troisième pièce d'accouplement (4c) présentant une section (4l) saillante dans la direction radiale au-dessus de la première ou de la deuxième pièce d'accouplement (4a, 4b), qui est réalisée en tant que disque de palier d'un palier axial (7).

2. Dispositif d'accouplement (4) selon la revendication 1, **caractérisé en ce qu'**au moins la section saillante (4l) de la troisième pièce d'accouplement (4c) est réalisée par un processus de formage, en particulier par forgeage.

3. Dispositif d'accouplement (4) selon l'une des revendications précédentes, **caractérisé en ce que** la troisième pièce d'accouplement (4c) est réalisée en forme de disque, sans perçage en son centre.

4. Dispositif d'accouplement (4) selon l'une des revendications précédentes, **caractérisé en ce que** la troisième pièce d'accouplement (4c) présente une pluralité de perçages (4k) disposés excentrés, lesquels sont disposés en particulier sur une ligne circulaire s'étendant de manière concentrique par rapport à la troisième pièce d'accouplement (4c).

5. Dispositif d'accouplement (4) selon l'une des revendications précédentes, **caractérisé en ce que** l'épaisseur de la troisième pièce d'accouplement (4c) décroît radialement vers l'extérieur.

6. Dispositif d'accouplement (4) selon l'une des revendications précédentes, **caractérisé en ce que** la troisième pièce d'accouplement (4c) présente au moins une gorge circulaire (4o) s'étendant dans la direction périphérique, laquelle est disposée de manière concentrique par rapport à la troisième pièce d'accouplement (4c).

7. Dispositif d'accouplement (4) selon l'une des revendications précédentes, comprenant un électro-aimant (7c), lequel est disposé à côté de la troisième pièce d'accouplement (4c).

8. Turbocompresseur comprenant un dispositif d'accouplement (4) selon l'une des revendications précédentes.
